(19) Europäisches Patentamt
European Patent Office
Office européen des brevets

(11) **EP 4 534 582 A1**

(12) **EUROPÄISCHE PATENTANMELDUNG**

(43) Veröffentlichungstag:
**09.04.2025  Patentblatt 2025/15**

(21) Anmeldenummer: 23201897.8

(22) Anmeldetag: **05.10.2023**

(51) Internationale Patentklassifikation (IPC):
**C08G 63/16** (2006.01)      **C08G 63/78** (2006.01)

(52) Gemeinsame Patentklassifikation (CPC):
**C08G 63/16; C08G 18/42; C08G 63/181;
C08G 63/78**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG
51373 Leverkusen (DE)**

(72) Erfinder:
• **Ruwisch, Mirko
51061 Köln (DE)**

• **Marbach, Jakob
51371 Leverkusen (DE)**
• **Beuck, Saskia
51375 Leverkusen (DE)**
• **Buijsen, Paul
8043 AA Zwolle (NL)**
• **Kardash, Stanislav
45143 Essen (DE)**

(74) Vertreter: **Levpat
c/o Covestro AG
Gebäude K12
51365 Leverkusen (DE)**

(54) **VERFAHREN ZUR HERSTELLUNG EINES HYDROXYLGRUPPEN-TERMINIERTEN POLYESTEROLS**

(57)     Die vorliegende Erfindung betrifft ein spezielles Verfahren zur Herstellung eines Hydroxylgruppen-terminierten Polyesterols über eine zweistufige Polykondensationsreaktion, das mithilfe dieses Verfahrens erhaltende Polyesterol, sowie deren Verwendung dieser Polyesterole zur Herstellung von Polyurethanen.

EP 4 534 582 A1

**Beschreibung**

Die vorliegende Erfindung betrifft ein spezielles Verfahren zur Herstellung eines Hydroxylgruppen-terminierten Polyesterols über eine zweistufige Polykondensationsreaktion, das mithilfe dieses Verfahrens erhaltende Polyesterol, sowie die Verwendung dieser Polyesterole zur Herstellung von Polyurethanen.

Hydroxylgruppen-terminierte Polyesterole werden technisch meist über Kondensationsreaktionen durch Umsetzung eines Polyols mit einer Polycarbonsäure teilweise in Gegenwart von Katalysatoren unter Bildung des Polyesterols und Wasser hergestellt, wobei das Wasser aus dem Reaktionssystem entfernt werden muss. Hierbei werden die Eduktkomponenten meist im Reaktor vorgelegt und anschließend zum Produkt umgesetzt, wobei das Reaktorvolumen durch die Wasserbildung meist nur teilweise genutzt werden kann. In WO 2018/058016 A1 wird ein Verfahren zur Herstellung von Polyesterpolyolen mit einem hohen Anteil an erneuerbaren Einsatzstoffen aus biologischen Quellen offenbart, wobei das Polyesterol durch Umsetzung von bioerneuerbarer Bernsteinsäure mit bioerneuerbarem 1,3-Propandiol und bioerneuerbarem Isosorbid erhalten wird.

Aufgabe der vorliegenden Erfindung war die Bereitstellung eines Verfahrens zur Herstellung von Hydroxylgruppen-terminierten, Polyesterolen mittels Kondensationsreaktion durch Umsetzung eines Polyols mit einer Polycarbonsäure und/oder eines cyclischen Carbonsäureanhydrids unter Bildung eines Polyesterols und Wasser, wobei das Polyesterol-Produkt eine niedrigere Säurezahl von weniger als 5,0 mgKOH/g, bevorzugt von weniger 2,0 mgKOH/g, besonders bevorzugt 1,0 mgKOH/g aufweist, welche vergleichbar bevorzugt kleiner ist gegenüber Polyesterol-Herstellverfahren aus dem Stand der Technik für eine definierte Reaktionszeit. Ein weiterer Aspekt ist die Reduktion der Reaktionszeit zur Herstellung des Polyesterol Produkts gegenüber den meist einstufigen Herstellungsverfahren aus dem Stand der Technik bei gleichbleibenden bevorzugt verbesserten Produkteigenschaften, wie beispielsweise einer niedrigen Säurezahl des Polyesterol Produkts. Im Speziellen ist es auch Ziel der Erfindung die Produktionsausbeute des erfindungsgemäßen Verfahrens im vorgegeben Reaktorvolumen möglichst bei Minimierung der Reaktionszeit zu maximieren unter Voraussetzung der gleichbleibenden Produkteigenschaften für die Endanwendung wie beispielsweise die Hyxdroxylzahl, Säurezahl, Farbzahl und/oder Reaktivität.

Diese Aufgabe wurde erfindungsgemäß gelöst durch ein Verfahren zur Herstellung eines Hydroxylgruppen-terminierten Polyesterols umfassend der Kondensationreaktion einer Polycarbonsäure und/oder eines cyclischen Carbonsäureanhydrids, bevorzugt einer Polycarbonsäure, mit $m(COOH)$-mol Carboxylgruppen mit einem Polyol mit $n(OH)$-mol freien Hydroxylgruppen in einem Reaktor umfassend folgende Schritte:

i) Umsetzung der Polycarbonsäure und/oder des cyclischen Anhydrids mit $m(COOH)$-mol Carboxylgruppen mit einer ersten Teilmenge T1 des Polyols mit $n1(OH)$-mol freien Hydroxylgruppen innerhalb der Reaktionszeit t1 unter Bildung eines Carboxylgruppen-terminierten Polyester-Intermediats,
ii) Umsetzung des Carboxylgruppen-terminierten Polyester-Intermediats mit einer zweiten Teilmenge T2 des Polyols mit $n2(OH)$-mol freien Hydroxylgruppen innerhalb der Reaktionszeit t2 unter Bildung des Hydroxylgruppen-terminierten Polyesterols;

wobei das Stoffmengenverhältnis $m(COOH)/n1(OH)$ größer als 1,0 mol/mol, bevorzugt von 1,05 mol/mol bis 1,5 mol/mol und besonders bevorzugt von 1,05 mol/mol bis 1,3 mol/mol ist; wobei $m(COOH) < n(OH)$, bevorzugt $m(COOH)+1,0 < n(OH)$, besonders bevorzugt $m(COOH)+1,0 < n(OH) < m(COOH)+2,0$ ist;
wobei das in Schritt i) gebildete Wasser kontinuierlich oder stufenweise, bevorzugt kontinuierlich aus dem Reaktor entfernt wird;
wobei in Schritt i) von 65 mol-% bis 95 mol-%, bevorzugt von 70 mol-% bis 90 mol-% und besonders bevorzugt von 75 mol-% bis 85 mol-% des Polyols bezogen auf die Summe der in Schritt i) und ii) zugegebenen Menge an Polyol zugegeben wird;
und wobei die Reaktionszeit t1 von 0,58 h/h bis 0,95 h/h, bevorzugt von 0,59 h/h bis 0,90 h/h und besonders bevorzugt von 0,60 h/h bis 0,80 h/h und ganz besonders bevorzugt von 0,60 h/h bis 0,75 h/h bezogen auf die Summe der Reaktionszeiten t1 und t2 beträgt.

Erfindungsgemäß ist unter einem Hydroxylgruppen-terminierten Polyesterol eine Hydroxylgruppen-terminierte Verbindung mit mindestens zwei Estergruppen, bevorzugt mit mindestens zwei terminalen Hydroxylgruppen zu verstehen, wobei die Säurezahl des Polyesterols von weniger als 5,0 mg KOH/g, bevorzugt von weniger 2,0 mg KOH/g, besonders bevorzugt 1,0 mg KOH/g ist, wobei die Säurezahl mittels der im Experimentalteil offenbarten Methode bestimmt wird (gemessene Säurezahl).

In einer Ausführungsform des erfindungsgemäßen Verfahrens weist das Hydroxylgruppen-terminierte Polyesterol eine berechnete Hydroxylzahl von 10 mg KOH/g bis 500 mg KOH/g, bevorzugt von 10 mg KOH/g bis 400 mg KOH/g und besonders bevorzugt von 15 mg KOH/g bis 350 mg auf.

Unter einer Kondensationsreaktion ist erfindungsgemäß und in Übereinstimmung mit dem allgemeinen Fachwissen die Umsetzung einer Polyolkomponente mit mindestens zwei freien Hydroxylgruppen mit einer Polycarbonsäure und/oder eines cyclischen Carbonsäureanhydrids mit mindestens zwei Carboxylgruppen unter Bildung des Polyester(ol)s und Wasser zu verstehen. Die Carboxylgruppen des cyclischen Anhydrids in der erfindungsgemäßen Kondensationsreaktion können wie bei dem Trimellitsäureanhydrid bereits in der Molekülstruktur enthalten sein oder resultieren infolge in der Reaktion mit Wasser und/oder den freien Hydroxylgruppen des Polyols, wobei durch die entsprechende Reaktion zwei Carboxylgruppen je Anhydridgruppe gebildet werden.

Erfindungsgemäß ist unter einem Carboxylgruppen-terminierten Polyester-Intermediat das Umsetzungsprodukt einer Polycarbonsäure und/oder eines cyclischen Carbonsäureanhydrids mit m(COOH)-mol Carboxylgruppen mit einer ersten Teilmenge T1 des Polyols mit n1(OH)-mol Hydroxylgruppen zu verstehen, wobei das Stoffmengenverhältnis m(COOH)/n1(OH) größer als 1,0 mol/mol, bevorzugt von von 1,05 mol/mol bis 1,5 mol/mol, und besonders bevorzugt von 1,05 mol/mol bis 1,3 mol/mol.

Erfindungsgemäß ist unter der Reaktionszeit, sowohl die Reaktionszeit t1 als auch die Reaktionszeit t2, die Zeit unter Reaktionstemperatur zu verstehen, wobei die Dosierung einer Reaktionskomponente zu dem Reaktionssystem und die Reaktion der Reaktionskomponenten unter der Reaktionstemperatur davon umfasst ist. Grundsätzlich wird erfindungsgemäß von einer Kondensationsreaktion zwischen der Polycarbonsäure und/oder des cyclischen Carbonsäureanhydrids mit dem Polyol unter Bildung des Carboxylgruppen-terminierten Polyester-Intermediats in Schritt i) und des Hydroxylgruppen-terminierten Polyesterols in Schritt ii) ab einer Reaktionstemperatur von 150 °C ausgegangen. Erfindungsgemäß entspricht die Reaktionstemperatur die Temperatur der Reaktionsmischung im Reaktor, wobei die Temperaturmessung mit für den Fachmann üblichen Mitteln erfolgt.

Erfindungsgemäß sind unter Polycarbonsäuren Verbindungen mit zwei oder mehreren (freien) Carboxylgruppen zu verstehen, wobei die Polycarbonsäure pro Molekül m(COOH)-mol (freie) Carboxylgruppen enthält. Daneben können auch Monocarbonsäuren mit nur einer (freien) Carboxylgruppegruppe eingesetzt werden. Beispiele für entsprechende Monocarbonsäuren sind Ölsäure und Ricinolsäure. Auch Derivate der vorgenannten Monocarbonsäuren wie Sojaöl oder Rinzinusöl können eingesetzt werden, wobei dies erfindungemäß nicht bevorzugt ist.

Zu den Polycarbonsäuren gehören beispielsweise gesättigte oder ungesättigte, lineare oder verzweigte, aliphatische oder cycloaliphatische Polycarbonsäuren oder gegebenenfalls verzweigte aromatische Polycarbonsäuren mit bevorzugt bis zu 20, besonders bevorzugt bis zu 10 Kohlenstoffatomen (einschließlich der C-Atome der Carbonsäuregruppen), die gegebenenfalls Heteroatome aus der Reihe Sauerstoff (ungeachtet der Sauerstoffatome der Säuregruppen), Schwefel, Stickstoff und Halogene aufweisen.

Bevorzugt weisen die Polycarbonsäuren 2 freie Carboxylgruppen auf.

In einer Ausführungsform des erfindungsgemäßen Verfahrens ist die Polycarbonsäure eine oder mehrere Verbindung(en) und wird ausgewählt aus der Gruppe bestehend aus Terephthalsäure, Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Maleinsäure, Fumarsäure, Citraconsäure, Mesaconsäure und Furandicarbonsäure, bevorzugt Bernsteinsäure, Glutarsäure und Adipinsäure besonders bevorzugt Adipinsäure.

Polycarbonsäuren können einzeln oder in Mischung im erfindungsgemäßen Verfahren eingesetzt werden.

Erfindungsgemäß sind unter cyclischen Anhydriden Verbindungen mit mindestens einer Anhydridgruppe zu verstehen, wobei diese Anhydridgruppe Bestandteil einer cyclischen Ringstruktur ist, wobei bevorzugt fünfgliedrige oder sechsgliedrige Ringstrukturen gebildet werden. Anhydride können durch intramolekulare Wasserabspaltung von Dicarbonsäuren gebildet werden, wie beispielsweise der Wasserabspaltung der Butandisäure unter Bildung von Butandisäureanhydrid (Bernsteinsäureanhydrid).

In einer Ausführungsform des erfindungsgemäßen Verfahrens ist das cyclische Carbonsäureanhydrid eine oder mehrere Verbindung(en) und wird ausgewählt aus der Gruppe bestehend aus Bernsteinsäureanhydrid, Maleinsäureanhydrid, Glutarsäureanhydrid, Itaconsäureanhydrid, Zitronensäureanhydrid, cis-Aconitsäureanhydrid, 2-(2'-carboxyethyl)maleinsäureanhydrid, 1-methlyl-2-(2'-carboxyethyl)maleinsäureanhydrid, Phthalsäureanhydrid und Trimellitsäureanhydrid, bevorzugt Bernsteinsäureanhydrid, Maleinsäureanhydrid Phthalsäureanhydrid und Trimellitsäureanhydrid, besonders bevorzugt Phthalsäureanhydrid.

Cyclische Carbonsäureanhydride können einzeln oder in Mischung im erfindungsgemäßen Verfahren eingesetzt werden.

Infolge der Verwendung des cyclischen Carbonsäureanhydrids wird die Produktionsausbeute des im vorgeben Reaktorvolumen noch weiter erhöht.

Erfindungsgemäß sind unter Polyolen Verbindungen mit zwei oder mehreren freien Hydroxylgruppen zu verstehen, wobei das Polyol pro Molekül n(OH)-mol freie Hydroxylgruppen enthält. Daneben können auch Monole mit nur einer freien Hydroxylgruppe oder Verbindungen mit einer freien Hydroxylgruppe und einer (freien) Carboxylgruppe eingesetzt werden, wobei beispielsweise Ricinolsäure je eine freie Hydroxylgruppe und Carboxylgruppe enthält, wobei die Verwendung dieser Verbindungen erfindungsgemäß nicht bevorzugt ist.

In einer Ausführungsform des erfindungsgemäßen Verfahrens beträgt der Anteil an primären Hydroxylgruppen der ersten Teilmenge T1 des Polyols in Schritt i) mindestens 50 %, bevorzugt mindestens 60 % und besonders bevorzugt mindestens 75 % bezogen auf die Summe aller Hydroxylgruppen der ersten Teilmenge T1 des Polyols.

In einer Ausführungsform des erfindungsgemäßen Verfahrens ist das Polyol eine oder mehrere Verbindung(en) und wird ausgewählt aus der Gruppe bestehend aus Ethylenglycol, Diethylenglycol, Triethylenglycol, 1,2-Propylenglycol, Dipropylenglycol, 1,3-Propandiol, 1,3-Butandiol, 1,4-Butandiol, 1,6-Hexandiol, 1,12-Dodecandiol, Neopentylglycol, Trimethylolpropan, Triethylolpropan, Rizinusöl und Glycerin, bevorzugt Ethylenglycol, Diethylenglycol, 1,2-Propylenglycol, 1,4-Butandiol, besonders bevorzugt wird 1,4-Butandiol und Diethylenglycol.

Polyole können einzeln oder in Mischung im erfindungsgemäßen Verfahren eingesetzt werden. In einer Ausführungsform des erfindungsgemäßen Verfahrens wird die Polykondensationsreaktion, d.h. Schritt i) oder/und ii) in Gegenwart eines Katalysators durchgeführt.

In einer bevorzugten Ausführungsform des erfindungsgemäßen Verfahrens wird Schritt ii) in Gegenwart eines Katalysators durchgeführt, wobei Zinn(II)-Salze, wie z.B Zinndichlorid, Zinndichlorid-Dihydrat, Zinn(II)-2-ethylhexanoat, Dibutylzinndilaurat; Titanalkoxylate, wie z.B. Titantetrabutanolat, Tetraisopropyltitanat; Bismuth(III)-neodecanoat; Zink(II)-acetat; Mangan(II)-acetat oder Protonsäuren, wie z.B. p Toluolsulfonsäure genannt seien. Weiterhin kann die erfindungsgemäße Kondensationsreaktion auch durch Enzyme, wie z.B. Esterasen und/oder Lipasen, katalysiert werden, wobei entsprechende Enzyme als Katalysatoren erfindungsgemäß nicht bevorzugt sind.

In einer Ausführungsform des erfindungsgemäßen Verfahrens ist der Katalysator eine oder mehrere Verbindung(en) und wird ausgewählt aus der Gruppe bestehend aus Zinndichlorid, Zinndichlorid-Dihydrat, Zinn(II)-2-ethylhexanoat, Dibutylzinndilaurat, Titantetrabutanolat, Tetraisopropyltitanat; Bismuth(III)-neodecanoat; Zink(II)-acetat und Mangan(II)-acetat.

In einer Ausführungsform des erfindungsgemäßen Verfahrens wird der Katalysator in Mengen von 1 ppm bis 500 ppm, bevorzugt von 2 ppm bis 200 ppm und besonders bevorzugt von 5 ppm bis 100 ppm bezogen auf die eingesetzte Menge an Polyol und Polycarbonsäure eingesetzt.

In einer alternativen Ausführungsform des erfindungsgemäßen Verfahrens wird die Polykondensationsreaktion, d.h. die Schritt i) oder/und ii) in Abwesenheit eines Katalysators durchgeführt.

In einer Ausführungsform des erfindungsgemäßen Verfahrens wird Schritt i) bei einer Temperatur, d.h. einer Reaktionstemperatur Schritt i), von 150 °C bis 250 °C, bevorzugt von 155 °C bis 240 °C, und besonders bevorzugt von 158 °C bis 240 °C durchgeführt.

In einer Ausführungsform des erfindungsgemäßen Verfahrens wird Schritt i) in einer Reaktionszeit t1 von 30 min bis 12 h, bevorzugt von 30 min bis 10 h, und besonders bevorzugt von 60 min bis 8 h durchgeführt.

In einer Ausführungsform des erfindungsgemäßen Verfahrens umfasst Schritt i) die Schritte i-1) und i-2). In einer bevorzugten Ausführungsform des erfindungsgemäßen Verfahrens besteht Schritt i) aus den Schritten i-1) und i-2), d.h. kein weiterer Schritt (Verfahrensschritt) wird in Schritt i) durchgeführt.

In einer Ausführungsform des erfindungsgemäßen Verfahrens beträgt das Verhältnis SZ(berechnet)/SZ(gemessen) der berechneten Zielsäurezahl SZ(berechnet) zur gemessenen Säurezahl SZ(gemessen) für das Carboxylgruppen-terminierte Polyester-Intermediat in Schritt i) mindestens 0,45; bevorzugt von 0,50 bis 1,0 besonders bevorzugt von 0,53 bis 0,90 bevor das Carboxylgruppen-terminierten Polyester-Intermediats in Schritt ii) weiter umgesetzt wird; wobei die gemessenen Säurezahl SZ(gemessen) mittels der im Experimentalteil offenbarte Methode bestimmt wurde; und wobei die berechnete Zielsäurezahl SZ(berechnet) mittels der im Experimentalteil offenbarte Methode bestimmt wurde.

In einer Ausführungsform des erfindungsgemäßen Verfahrens wird Schritt i-1) bei einem Reaktionsdruck durchgeführt, welcher größer ist als der in dem sich anschließenden Schritt i-2). Bevorzugt beträgt der Reaktionsdruck in Schritt i-1) von $1,0 \cdot 10^{-3}$ bara bis 1,0 bara, bevorzugt von $300 \cdot 10^{-3}$ bara bis 1,0 bara und besonders bevorzugt von $500 \cdot 10^{-3}$ bara bis 1,0 bara. Ganz besonders bevorzugt wird Schritt i-1) bei Normdruck bzw. Umgebungsdruck durchgeführt.

In einer Ausführungsform des erfindungsgemäßen Verfahrens umfasst Schritt i) die Schritte i-1) und i-2), wobei sich Schritte i-2) zeitlich an Schritt i-1) anschließt und Schritt i-2) mindestens 90 %, bevorzugt mindestens 70 % und besonders bevorzugt 50 % der Reaktionszeit von Schritt i) umfasst, und wobei der Reaktordruck in Schritt i-2) geringer ist als in Schritt i-1). In einer bevorzugten Ausführungsform des erfindungsgemäßen Verfahrens der Reaktordruck in Schritt i-2) von $1,0 \cdot 10^{-3}$ bara bis 1,0 bara, bevorzugt von $1,0 \cdot 10^{-3}$ bara bis 0,55 bara und besonders bevorzugt von $1,0 \cdot 10^{-3}$ bara bis 0,35 bara.

In einer Ausführungsform des erfindungsgemäßen Verfahrens wird Schritt ii) bei der gleichen Temperatur (Reaktionstemperatur) durchgeführt wie Schritt i). In einer bevorzugten Ausführungsform des erfindungsgemäßen Verfahrens wird Schritt ii) bei einer Temperatur von 150 °C bis 250 °C, bevorzugt von 155 °C bis 240 °C, und besonders bevorzugt von 160 °C bis 240 °C durchgeführt.

In einer Ausführungsform des erfindungsgemäßen Verfahrens ist der der Reaktordruck zu Beginn des Schritts ii) identisch mit dem Reaktionsdruck am Ende des Schrittes i-2).

In einer Ausführungsform des erfindungsgemäßen Verfahrens beträgt der Reaktordruck in Schritt ii) von $1,0 \cdot 10^{-3}$ bara bis 1,0 bara, bevorzugt von $1,0 \cdot 10^{-3}$ bara bis 0,55 bara und besonders bevorzugt von $1,0 \cdot 10^{-3}$ bara bis 0,35 bara.

Ein weiterer Gegenstand der Erfindung ist ein Carboxylgruppen-terminierten Polyester-Intermediat erhältlich nach dem erfindungsgemäßen Verfahren, wobei das Verhältnis SZ(berechnet)/SZ (gemessen) der berechneten Zielsäurezahl SZ(berechnet) zur gemessenen Säurezahl SZ(gemessen) für das Carboxylgruppen-terminierte Polyester-Intermediat in Schritt i) mindestens 0,45; bevorzugt von 0,50 bis 1,0 besonders bevorzugt von 0,53 bis 0,90 beträgt. Ein weiterer Gegenstand der Erfindung ist ein Hydroxylgruppen-terminiertes Polyesterol erhältlich nach dem erfindungsgemäßen Verfahren, wobei das Hydroxylgruppen-terminierte Polyesterol eine berechnete Hydroxylzahl von 10 mgKOH/g bis 500 mgKOH/g, bevorzugt von 10 mgKOH/g bis 400 mgKOH/g und besonders bevorzugt von 15 mgKOH/g bis 350 mgKOH/g aufweist.

Ein weiterer Gegenstand der Erfindung ist die Verwendung des Hydroxylgruppen-terminierten Polyesterols hergestellt nach dem erfindungsgemäßen oder des nach dem erfindungsgemäßen Verfahren erhältlichen Hydroxylgruppen-terminierten Polyesterols zur Herstellung eines Polyurethans.

In einer ersten Ausführungsform betrifft die Erfindung ein Verfahren zur Herstellung eines Hydroxylgruppen-terminierten Polyesterols umfassend der Kondensationsreaktion einer Polycarbonsäure und/oder eines cyclischen Carbonsäureanhydrids, bevorzugt einer Polycarbonsäure, mit m(COOH)-mol Carboxylgruppen mit einem Polyol mit n(OH)-mol freien Hydroxylgruppen in einem Reaktor umfassend folgende Schritte:

i) Umsetzung der Polycarbonsäure und/oder des cyclischen Carbonsäureanhydrids mit m(COOH)-mol Carboxylgruppen mit einer ersten Teilmenge T1 des Polyols mit n1(OH)-mol freien Hydroxylgruppen innerhalb der Reaktionszeit t1 unter Bildung eines Carboxylgruppen-terminierten Polyester-Intermediats,

ii) Umsetzung des Carboxylgruppen-terminierten Polyester-Intermediats mit einer zweiten Teilmenge T2 des Polyols mit n2(OH)-mol freien Hydroxylgruppen innerhalb der Reaktionszeit t2 unter Bildung des Hydroxylgruppen-terminierten Polyesterols;

wobei das Stoffmengenverhältnis m(COOH)/n1(OH) größer als 1,0 mol/mol, bevorzugt von 1,02 mol/mol bis 1,5 mol/mol, und besonders bevorzugt von 1,05 mol/mol bis 1,3 mol/mol ist; wobei m(COOH) < n(OH), bevorzugt m(COOH)+1,0 <n(OH), besonders bevorzugt m(COOH)+1,0 < n(OH) < m(COOH)+2,0 ist;

wobei das in Schritt i) gebildete Wasser kontinuierlich oder stufenweise, bevorzugt kontinuierlich aus dem Reaktor entfernt wird;

wobei in Schritt i) von 62 mol-% bis 95 mol-%, bevorzugt von 64 mol-% bis 90 mol-% und besonders bevorzugt von 75 mol-% bis 85 mol-% des Polyols bezogen auf die Summe der in Schritt i) und ii) zugegebenen Menge an Polyol zugegeben wird;

und wobei die Reaktionszeit t1 von 0,58 h/h bis 0,95 h/h, bevorzugt von 0,59 h/h bis 0,90 h/h und besonders bevorzugt von 0,60 h/h bis 0,80 h/h und ganz besonders bevorzugt von 0,60 h/h bis 0,75 h/h bezogen auf die Summe der Reaktionszeiten t1 und t2 beträgt.

In einer zweiten Ausführungsform betrifft die Erfindung ein Verfahren gemäß der ersten Ausführungsform, wobei das Hydroxylgruppen-terminierte Polyesterol eine berechnete Hydroxylzahl von 10 mg KOH/g bis 500 mg KOH/g, bevorzugt von 10 mg KOH/g bis 400 mg KOH/g und besonders bevorzugt von 15 mg KOH/g bis 350 mg KOH/g aufweist.

In einer dritten Ausführungsform betrifft die Erfindung ein Verfahren gemäß der ersten oder zweiten Ausführungsform, wobei die Polycarbonsäure eine oder mehrere Verbindung(en) ist und ausgewählt wird aus der Gruppe bestehend aus Terephthalsäure, Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Maleinsäure, Fumarsäure, Citraconsäure, Mesaconsäure und Furandicarbonsäure, bevorzugt Bernsteinsäure, Glutarsäure und Adipinsäure besonders bevorzugt Adipinsäure.

In einer vierten Ausführungsform betrifft die Erfindung ein Verfahren gemäß einer der ersten bis dritten Ausführungsform, wobei das cyclische Carbonsäureanhydrid eine oder mehrere Verbindung(en) ist und ausgewählt wird aus der Gruppe bestehend aus Bernsteinsäureanhydrid, Maleinsäureanhydrid, Glutarsäureanhydrid, Itaconsäureanhydrid, Zitronensäureanhydrid, cis-Aconitsäureanhydrid, 2-(2'-carboxyethyl)maleinsäureanhydrid, 1-methlyl-2-(2'-carboxyethyl)maleinsäureanhydrid, Phthalsäureanhydrid und Trimellitsäureanhydrid, bevorzugt Bernsteinsäureanhydrid, Maleinsäureanhydrid Phthalsäureanhydrid und Trimellitsäureanhydrid, besonders bevorzugt Phthalsäureanhydrid.

In einer fünften Ausführungsform betrifft die Erfindung ein Verfahren gemäß einer der ersten bis vierten Ausführungsform, wobei der Anteil an primären Hydroxylgruppen der ersten Teilmenge T1 des Polyols in Schritt i) mindestens 50 %, bevorzugt mindestens 60 % und besonders bevorzugt mindestens 75 % bezogen auf die Summe aller Hydroxylgruppen der ersten Teilmenge T1 des Polyols beträgt.

In einer sechsten Ausführungsform betrifft die Erfindung ein Verfahren gemäß einer der ersten bis fünften Ausführungsform, wobei das Polyol eine oder mehrere Verbindung(en) ist und ausgewählt wird aus der Gruppe bestehend aus Ethylenglycol, Diethylenglycol, Triethylenglycol, 1,2-Propylenglycol, Dipropylenglycol, 1,3-Propandiol, 1,3-Butandiol, 1,4-Butandiol, 1,6-Hexandiol, 1,12-Dodecandiol, Neopentylglycol, Trimethylolpropan, Triethylolpropan, Rizinusöl und Glycerin, bevorzugt Ethylenglycol, Diethylenglycol, 1,2-Propylenglycol, 1,4-Butandiol, besonders bevorzugt wird 1,4-Butandiol und Diethylenglycol. In einer siebten Ausführungsform betrifft die Erfindung ein Verfahren gemäß einer der ersten bis sechsten Ausführungsform, wobei die Polykondensationsreaktion, d.h. Schritt i) oder/und ii) in Gegenwart eines Katalysators durchgeführt wird.

In einer achten Ausführungsform betrifft die Erfindung ein Verfahren gemäß einer der ersten bis siebten Ausführungsform, wobei Schritt ii) in Gegenwart eines Katalysators durchgeführt wird.

In einer neunten Ausführungsform betrifft die Erfindung ein Verfahren gemäß der siebten oder achten Ausführungsform, wobei der Katalysator eine oder mehrere Verbindungen ist und ausgewählt wird aus der Gruppe bestehend aus Zinndichlorid, Zinndichlorid-Dihydrat, Zinn(II)-2-ethylhexanoat, Dibutylzinndilaurat; Titantetrabutanolat, Tetraisopropyltitanat; Bismuth(III)-neodecanoat; Zink(II)-acetat; Mangan(II)-acetat und p Toluolsulfonsäure bevorzugt Zinndichlorid, Zinndichlorid-Dihydrat, Zinn(II)-2-ethylhexanoat, Dibutylzinndilaurat, Titantetrabutanolat, Tetraisopropyltitanat; Bismuth(III)-neodecanoat; Zink(II)-acetat und Mangan(II)-acetat.

In einer zehnten Ausführungsform betrifft die Erfindung ein Verfahren gemäß einer der siebten bis neunten Ausführungsform, wobei der Katalysator in Mengen von 1 ppm bis 500 ppm, bevorzugt von 2 ppm bis 200 ppm und besonders bevorzugt von 5 ppm bis 100 ppm bezogen auf die eingesetzte Menge an Polyol und Polycarbonsäure eingesetzt wird.

In einer elften Ausführungsform betrifft die Erfindung ein Verfahren gemäß einer der ersten bis sechsten Ausführungsform, wobei die Polykondensationsreaktion, d.h. die Schritt i) oder/und ii) in Abwesenheit eines Katalysators durchgeführt wird.

In einer zwölften Ausführungsform betrifft die Erfindung ein Verfahren gemäß einer der ersten bis zwölften Ausführungsform, wobei Schritt i) bei einer Temperatur, d.h. einer Reaktionstemperatur Schritt i), von 150 °C bis 250 °C, bevorzugt von 170 °C bis 240 °C, und besonders bevorzugt von 180 °C bis 240 °C durchgeführt wird.

In einer dreizehnten Ausführungsform betrifft die Erfindung ein Verfahren gemäß einer der ersten bis zwölften Ausführungsform, wobei

In einer vierzehnten Ausführungsform betrifft die Erfindung ein Verfahren gemäß einer der ersten bis dreizehnten Ausführungsform, wobei Schritt i) in einer Reaktionszeit t1 von 30 min bis 12 h, bevorzugt von 30 min bis 10 h, und besonders bevorzugt von 60 min bis 8 h durchgeführt wird.

In einer fünfzehnten Ausführungsform betrifft die Erfindung ein Verfahren gemäß einer der ersten bis vierzehnten Ausführungsform, wobei Schritt i) die Schritte i-1) und i-2) umfasst bevorzugt aus Schritt i) die Schritte i-1) und i-2) besteht.

In einer sechzehnten Ausführungsform betrifft die Erfindung ein Verfahren gemäß einer der ersten bis fünfzehnten Ausführungsform, wobei das Verhältnis SZ(berechnet)/SZ (gemessen) der berechneten Zielsäurezahl SZ(berechnet) zur gemessenen Säurezahl SZ(gemessen) für das Carboxylgruppen-terminierte Polyester-Intermediat in Schritt i) mindestens 0,45; bevorzugt von 0,50 bis 1,0 besonders bevorzugt von 0,53 bis 0,90 beträgt bevor das Carboxylgruppen-terminierten Polyester-Intermediats in Schritt ii) weiter umgesetzt wird; wobei die gemessenen Säurezahl SZ(gemessen) mittels der im Experimentalteil offenbarte Methode bestimmt wurde; und wobei die berechnete Zielsäurezahl SZ(berechnet) mittels der im Experimentalteil offenbarte Methode bestimmt wurde

In einer siebzehnten Ausführungsform betrifft die Erfindung ein Verfahren gemäß der fünfzehnten oder sechzehnten Ausführungsform, wobei Schritt i-1) bei einem Reaktionsdruck durchgeführt wird, welcher größer ist als der in dem sich anschließenden Schritt i-2).

In einer achtzehnten Ausführungsform betrifft die Erfindung ein Verfahren gemäß einer der fünfzehnten bis siebzehnten Ausführungsform, wobei der Reaktionsdruck in Schritt i-1) von $1,0 \cdot 10^{-3}$ bara bis 1,0 bara, bevorzugt von $300 \cdot 10^{-3}$ bara bis 1,0 bara und besonders bevorzugt von $500 \cdot 10^{-3}$ bara bis 1,0 bara beträgt.

In einer neunzehnten Ausführungsform betrifft die Erfindung ein Verfahren gemäß einer der fünfzehnten bis siebzehnten Ausführungsform, wobei Schritt i-1) bei Normdruck oder Umgebungsdruck durchgeführt wird.

In einer zwanzigsten Ausführungsform betrifft die Erfindung ein Verfahren gemäß einer der ersten bis neunzehnten Ausführungsform, wobei Schritt i) die Schritte i-1) und i-2) umfasst, wobei sich Schritte i-2) zeitlich an Schritt i-1) anschließt und Schritt i-2) mindestens 90 %, bevorzugt mindestens 70 % und besonders bevorzugt 50 % der Reaktionszeit von Schritt i) umfasst, und wobei der Reaktordruck in Schritt i-2) geringer ist als in Schritt i-1).

In einer einundzwanzigsten Ausführungsform betrifft die Erfindung ein Verfahren gemäß einer der ersten bis einundzwanzigsten Ausführungsform, wobei Schritt ii) bei der gleichen Temperatur (Reaktionstemperatur) durchgeführt wird wie Schritt i).

In einer zweiundzwanzigsten Ausführungsform betrifft die Erfindung ein Verfahren gemäß einer der ersten bis zwölften Ausführungsform, wobei.

In einer dreiundzwanzigsten Ausführungsform betrifft die Erfindung ein Verfahren gemäß einer der ersten bis zweiundzwanzigsten Ausführungsform, wobei Schritt ii) bei einer Temperatur von 150 °C bis 250 °C, bevorzugt von 155 °C bis 240 °C, und besonders bevorzugt von 160 °C bis 240 °C durchgeführt wird.

In einer vierundzwanzigsten Ausführungsform betrifft die Erfindung ein Verfahren gemäß einer der ersten bis dreiundzwanzigsten Ausführungsform, wobei der der Reaktordruck zu Beginn des Schritts ii) identisch ist mit dem Reaktionsdruck am Ende des Schrittes i-2).

In einer fünfundzwanzigsten Ausführungsform betrifft die Erfindung ein Verfahren gemäß einer der ersten bis vierundzwanzigsten Ausführungsform, wobei

In einer sechsundzwanzigsten Ausführungsform betrifft die Erfindung ein Verfahren gemäß einer der ersten bis zwölften Ausführungsform, wobei der Reaktordruck in Schritt ii) von $1,0 \cdot 10^{-3}$ bara bis 1,0 bara, bevorzugt von $1,0 \cdot 10^{-3}$ bara bis 0,55 bara und besonders bevorzugt von $1,0 \cdot 10^{-3}$ bara bis 0,35 bara beträgt.

In einer siebenundzwanzigsten Ausführungsform betrifft die Erfindung ein Carboxylgruppen-terminierten Polyester-Intermediat erhältlich nach dem erfindungsgemäßen Verfahren, wobei das Verhältnis SZ(berechnet)/SZ (gemessen) der berechneten Zielsäurezahl SZ(berechnet) zur gemessenen Säurezahl SZ(gemessen) für das Carboxylgruppen-terminierte Polyester-Intermediat in Schritt i) mindestens 0,45; bevorzugt von 0,50 bis 1,0 besonders bevorzugt von 0,53 bis 0,90 beträgt.

In einer achtundzwanzigsten Ausführungsform betrifft die Erfindung ein Hydroxylgruppen-terminiertes Polyesterol erhältlich nach dem erfindungsgemäßen Verfahren, wobei das Hydroxylgruppen-terminierte Polyesterol eine berechnete Hydroxylzahl von 10 mg KOH/g bis 500 mg KOH/g, bevorzugt von 10 mg KOH/g bis 400 mg KOH/g und besonders bevorzugt von 15 mg KOH/g bis 350 mg KOH/g aufweist.

In einer neunundzwanzigsten Ausführungsform betrifft die Erfindung die Verwendung des Hydroxylgruppen-terminierten Polyesterols hergestellt nach dem erfindungsgemäßen oder des nach dem erfindungsgemäßen Verfahren erhältlichen Hydroxylgruppen-terminierten Polyesterols zur Herstellung eines Polyurethans.

**Beispiele**

**1. Methoden und Materialien**

1.1 Verwendete Rohstoffe:

| | |
|---|---|
| Adipinsäure | Reinheit >99 % |
| 1,4-Butandiol | Reinheit >99 % |
| Ethylenglykol | Reinheit >99 % |
| $SnCl_2 \cdot 2H_2O$ | Reinheit ≥97,0 % |
| Phthalsäureanhydrid | Reinheit >99 % |
| Diethylenglykol | Reinheit >99 % |

1.2 Verwendete Methoden

Die Analysen wurden wie folgt durchgeführt:

Hydroxylzahl: Blindwertbestimmung:
20 mL einer Phthalsäureanhydrid-Pyridinlösung werden in ein 250 mL Erlenmeyerkolben vorgelegt und 50 Minuten am Rückfluss gekocht. Anschließend mit 50mL Pyridin und Wasser versetzt und gegen eine wässrige 1M NaOH-Lösung titriert. Der Äquivalenzpunkt wird per pH-Elektrode bestimmt.
Bestimmung der Hydroxylzahl des Analyten:
Die Probe wird in einen 250 mL Erlenmeyerkolben eingewogen und mit 20 mL einer Phthalsäureanhydrid-Pyridinlösung versetzt. Das Gemisch wird anschließend für 50 Minuten am Rückfluss gekocht. Dann wird das Gemisch mit 50 mL Pyridin und Wasser versetzt und gegen eine wässrige 1M NaOH-Lösung titriert. Der Äquivalenzpunkt wird per pH-Elektrode bestimmt.
Die Einwaage der Probe berechnet sich durch:

$$m(Einwaage) = \frac{400 * M(Analyt)}{56100 * f}$$

M(Analyt) = Molmasse des Analyten in g/mol
56100 = Molmasse von KOH in mg KOH/mol
f = Hydroxylfunktionalität des Analyten

$$Hydroxylzahl = \frac{(v(Blindwert) - v(NaOH)) * c * t * 56,1}{m(Einwaage)}$$

Hyroxylzahl = in mgKOH/g
v(Blindwert) = Volumen der NaOH-Lösung der Blindwertbestimmung am Äquivalenzpunkt der Blindwertmessung in mL
v(NaOH) = Volumen der NaOH-Lösung am Äquivalenzpunkt der Hydroxylzahlbestimmung des Analyten in mL
c = Konzentration Natronlaugelösung, 1 mol/l
t = Titer der Natronlauge
56,1 = Molmasse von KOH in g/mol
m(Einwaage) = Einwaage des Analyten in g

Säurezahl gemessen: Es werden 3-5 g Probensubstanz in ein 150 mL Becherglas eingewogen und in einem Ethanol/Chlorbenzol-Gemisch (1:1) gelöst. Anschließend werden 5 Tropfen einer gesättigten Tymolphthalein-Ethanollösung zugegeben. Bei Säurezahlen > 25 mg KOH/g wird bis zum Farbumschlag gegen eine wässrige 1M NaOH-Lösung titriert. Bei Säurezahlen < 25 mg KOH/g wird bis zum Farbumschlag gegen eine wässrige 0,1M NaOH-Lösung titriert.

Die Säurezahl berechnet sich durch folgende Gleichung:

$$Säurezahl(gemessen) = \frac{56,1 * c * t * V(NaOH)}{m(Einwaage)}$$

Säurezahl (gemessen) = in mg KOH/g
56,1 = Molmasse von KOH in g/mol
c = Konzentration Natronlauge in mol/l
t = Titer der entsprechenden NaOH-Lösung
V(NaOH) = Verbrauch Natronlauge bei Tritration der Probe beim Farbumschlag in mL
m(Einwaage) = Proben Einwaage in g

Säurezahl berechnet:

$$Säurezahl(berechnet) = \frac{(n(COOH) - n(OH)) * 56,1}{m(Ansatz)}$$

n(COOH) = Stoffmenge an Säuregruppen eingesetzt zu Beginn von i) bzw ii) in mol
n(OH) = Stoffmenge an freien Hydroxylgruppen eingesetzt zu Beginn von i) in mol
56,1 = Molmasse von KOH in g/mol
m(Ansatz) = Gesamtmasse des Ansatzes zum Zeitpunkt x

RSZ:

$$RSZ = \frac{m(Ausbeute)}{(t_1 + t_2)}$$

m(Ausbeute) = Masse Ester nach der Reaktion in kg
$t_1 / t_2$ = Reaktionszeit in h

## 2. Polyesterol Synthese

Beispiel 1: Zweistufiges Herstellungsverfahren eines Hydroxylgruppen-terminierten Polyesterols umfassend der Kondensationsreaktion einer Polycarbonsäure mit einem Polyol

In einem 1. Schritt (Schritt i)) werden 1493,4 g Adipinsäure und 843,7 g (83,8 mol% der gesamten Hydroxyl-Stoffmenge aus i) und ii)) 1,4-Butandiol in einen 4 L-4-Halskolben ausgestattet mit mechanischem Rührwerk, Heizpilz, Sumpfthermometer, Stickstoff-Gasanschluss, Membranpumpen-Vakuum-Anschluss und einer 40 cm-Füllstoffkolonne mit aufgesetztem Kolonnenkopf und Intensivkühler eingewogen. Das Gemisch wird innerhalb von 40 Minuten auf 160 °C aufgeheizt. 3,1 h nachdem 150 °C erstmals als Sumpftemperatur überschritten wurden liegt eine Säurezahl (gemessen) von 128 mg KOH/g vor was einem Umsatz von 84 % entspricht. Es wird Vakuum angelegt und innerhalb von 1 h auf 12 mbar verringert. Nach weiteren 1,75 h liegt die Säurezahl (gemessen) des Carboxylgruppen-terminierten Polyester-Intermediats bei 83,0 mg KOH/g was einem Umsatz von 93 % entspricht. Rechnerisch ist eine Säurezahl (gemessen) von 48,2 mg KOH/g möglich, was einem Umsatz von 100 % entspräche. Der Ansatz mit dem in Schritt i) gebildeten Carboxylgruppen-terminierten Polyester-Intermediats wird auf Raumtemperatur abgekühlt.

Im sich anschließenden 2. Schritt (Schritt ii) werden 163,1g 1,4-Butandiol (16,2 mol% der gesamten Hydroxyl-Stoffmenge aus i) und ii)) und 152,9 mg Zinn(II)Chlorid*2$H_2$O 28%ig in Ethylenglykol (20 ppm Zinn(II)Chlorid*2$H_2$O gerechnet auf die Gesamtansatzmenge) zu dem Carboxylgruppen-terminierten Polyester-Intermediats aus Schritt i) hinzugegeben. Die Säurezahl (berechnet) beträgt zu diesem Zeitpunkt 75,8 mg KOH/g was einem Umsatz des Carboxylgruppen-terminierten Polyester-Intermediats in Schritt ii) von 0 % entspricht. Das Gemisch wird innerhalb von 20 Minuten auf 220 °C aufgeheizt. Nachdem erstmals in Schritt ii) 150 °C als Sumpftemperatur überschritten wurden dauert es 10 Minuten bis 220 °C im Sumpf erreicht sind, wird der Druck auf 250 mbar verringert und innerhalb von 55 Minuten auf 15 mbar eingestellt. Säurezahl (gemessen): 13,9 mg KOH/g, Umsatz 82 %. Nach weiteren 2,5 h ist die Säurezahl bei 0,8 mg KOH/g (99 % Umsatz), so dass das Hydroxylgruppen-terminierte Polyesterol resultiert.

Beispiel 2 (Vergleich): Zweistufiges Herstellungsverfahren eines Hydroxylgruppen-terminierten Polyesterols umfassend der Kondensationsreaktion einer Polycarbonsäure mit einem Polyol

In einem 1. Schritt (Schritt i)) werden 1493,4 g Adipinsäure und 604,1 g (60,0 mol% der gesamten Hydroxyl-Stoffmenge aus i) und ii)) 1,4-Butandiol in einen 4 L-4-Halskolben ausgestattet mit mechanischem Rührwerk, Heizpilz, Sumpfthermometer, Stickstoff-Gasanschluss, Membranpumpen-Vakuum-Anschluss und einer 40 cm-Füllstoffkolonne mit aufgesetztem Kolonnenkopf und Intensivkühler eingewogen. Das Gemisch wird innerhalb von 40 Minuten auf 160 °C aufgeheizt. 3,1 h nachdem 150 °C erstmals als Sumpftemperatur überschritten wurden liegt eine Säurezahl (gemessen) von 238 mg KOH/g vor was einem Umsatz von 93 % entspricht. Es wird Vakuum angelegt und innerhalb von 1 h auf 12 mbar verringert. Nach weiteren 1,75 h liegt die Säurezahl (gemessen) des Carboxylgruppen-terminierten Polyester-Intermediats bei 217 mg KOH/g was einem Umsatz von 98 % entspricht. Rechnerisch ist eine Säurezahl (gemessen) von 212,7 mg KOH/g möglich, was einem Umsatz von 100 % entspräche. Der Ansatz mit dem in Schritt i) gebildeten Carboxylgruppen-terminierten Polyester-Intermediats wird auf Raumtemperatur abgekühlt.

Im sich anschließenden 2. Schritt (Schritt ii) werden 402,7 g 1,4-Butandiol (40,0 mol % der gesamten Hydroxyl-Stoffmenge aus i) und ii)) und 152,9 mg Zinn(II)Chlorid*2$H_2$O 28%ig in Ethylenglykol (20 ppm Zinn(II)Chlorid*2$H_2$O gerechnet auf die Gesamtansatzmenge) zu dem Carboxylgruppen-terminierten Polyester-Intermediats aus Schritt i) hinzugegeben. Die Säurezahl (berechnet) beträgt zu diesem Zeitpunkt 178,3 mg KOH/g was einem Umsatz des Carboxylgruppen-terminierten Polyester-Intermediats in Schritt ii) von 0 % entspricht. Das Gemisch wird innerhalb von 20 Minuten auf 220 °C aufgeheizt. Nachdem erstmals in Schritt ii) 150 °C als Sumpftemperatur überschritten wurden dauert es 10 Minuten bis 220 °C im Sumpf erreicht sind, wird der Druck auf 250 mbar verringert und innerhalb von 55 Minuten auf 15 mbar eingestellt. Säurezahl (gemessen): 20,6 mg KOH/g, Umsatz 89 %. Nach weiteren 2,5 h ist die Säurezahl bei 1,7 mg KOH/g (99 % Umsatz). Eine Säurezahl (gemessen) von 0,9 mg KOH/g (99 % Umsatz) liegt nach weiteren 55 Minuten vor, so dass das Hydroxylgruppen-terminierte Polyesterol resultiert.

Beispiel 3 (Vergleich): Einstufiges Herstellungsverfahren eines Hydroxylgruppen-terminierten Polyesterols umfassend der Kondensationsreaktion einer Polycarbonsäure mit einem Polyol

In einem 1. Schritt (Schritt i)) werden 1493,4 g Adipinsäure und 1006,8 g (100 mol% der gesamten Hydroxyl-Stoffmenge) 1,4-Butandiol in einen 4 L-4-Halskolben ausgestattet mit mechanischem Rührwerk, Heizpilz, Sumpfthermometer, Stickstoff-Gasanschluss, Membranpumpen-Vakuum-Anschluss und einer 40 cm-Füllstoffkolonne mit aufgesetztem Kolonnenkopf und Intensivkühler eingewogen. Das Gemisch wird innerhalb von 40 Minuten auf 160 °C aufgeheizt. 3,1 h nachdem 150 °C erstmals als Sumpftemperatur überschritten wurden liegt eine Säurezahl (gemessen) von 92 mg KOH/g vor was einem Umsatz von 82 % entspricht. Es wird Vakuum angelegt und innerhalb von 1 h auf 12 mbar verringert. Nach weiteren 1,75 h liegt die Säurezahl (gemessen) des Carboxylgruppen-terminierten Polyester-Intermediats bei 32 mg KOH/g was einem Umsatz von 94 % entspricht. Rechnerisch ist eine Säurezahl (gemessen) von 0 mg KOH/g möglich, was einem Umsatz von 100 % entspräche. Der Ansatz mit dem in Schritt i) gebildeten Carboxylgruppen-terminierten Polyester-Intermediats wird auf Raumtemperatur abgekühlt.

Im sich anschließenden 2. Schritt (Schritt ii) werden 152,9 mg Zinn(II)Chlorid*2$H_2$O 28%ig in Ethylenglykol (20 ppm Zinn(II)Chlorid*2$H_2$O gerechnet auf die Gesamtansatzmenge) zu dem Carboxylgruppen-terminierten Polyester-Intermediats aus Schritt i) hinzugegeben. Das Gemisch wird innerhalb von 20 Minuten auf 220 °C aufgeheizt. Nachdem erstmals in Schritt ii) 150 °C als Sumpftemperatur überschritten wurden dauert es 10 Minuten bis 220 °C im Sumpf erreicht sind, , wird der Druck auf 250 mbar verringert und innerhalb von 55 Minuten auf 15 mbar eingestellt. Säurezahl (gemessen): 7,3 mg KOH/g, Umsatz 99 %. Nach weiteren 2,5 h ist die Säurezahl bei 1,6 mg KOH/g (99 % Umsatz). Eine Säurezahl (gemessen) von 0,8 mg KOH/g (100% Umsatz) liegt nach weiteren 55 Minuten vor, so dass das Hydroxylgruppen-terminierte Polyesterol resultiert.

2.4 Beispiel 4 (Vergleich) Beispiel 2 (Vergleich): Zweistufiges Herstellungsverfahren eines Hydroxylgruppen-terminierten Polyesterols mit einem Polyol

In einem 1. Schritt (Schritt i)) werden 1493,4 g Adipinsäure und 843,7 g (83,8 mol% der gesamten Hydroxyl-Stoffmenge aus i) und ii)) 1,4-Butandiol in einen 4 L-4-Halskolben ausgestattet mit mechanischem Rührwerk, Heizpilz, Sumpfthermometer, Stickstoff-Gasanschluss, Membranpumpen-Vakuum-Anschluss und einer 40 cm-Füllstoffkolonne mit aufgesetztem Kolonnenkopf und Intensivkühler eingewogen. Das Gemisch wird innerhalb von 30 Minuten auf 160 °C aufgeheizt. 3,1 h nachdem 150 °C erstmals als Sumpftemperatur überschritten wurden wird Vakuum angelegt und innerhalb von 1,5 h auf 16 mbar verringert. Nach weiteren 0,5 h liegt die Säurezahl (gemessen) des Carboxylgruppen-terminierten Polyester-Intermediats bei 86,5 mg KOH/g was einem Umsatz von 92 % entspricht. Rechnerisch ist eine Säurezahl (gemessen) von 48,2 mg KOH/g möglich, was einem Umsatz von 100 % entspräche. Der Ansatz mit dem in Schritt i) gebildeten Carboxylgruppen-terminierten Polyester-Intermediats wird auf Raumtemperatur abgekühlt.

Im sich anschließenden 2. Schritt (Schritt ii) werden 163,1 g 1,4-Butandiol (16,2 mol % der gesamten Hydroxyl-Stoffmenge aus i) und ii)) und 152,9 mg Zinn(II)Chlorid*2H$_2$O 28%ig in Ethylenglykol (20 ppm Zinn(II)Chlorid*2H$_2$O gerechnet auf die Gesamtansatzmenge) zu dem Carboxylgruppen-terminierten Polyester-Intermediats aus Schritt i) hinzugegeben. Die Säurezahl (berechnet) beträgt zu diesem Zeitpunkt 80,5 mg KOH/g was einem Umsatz des Carboxylgruppen-terminierten Polyester-Intermediats in Schritt ii) von 0 % entspricht. Das Gemisch wird innerhalb von 35 Minuten auf 220 °C aufgeheizt. Nachdem erstmals in Schritt ii) 150 °C als Sumpftemperatur überschritten wurden dauert es 15 Minuten bis 220 °C im Sumpf erreicht sind, es wird der Druck auf 250 mbar verringert und innerhalb von 50 Minuten auf 15 mbar eingestellt. Säurezahl (gemessen): 17,0 mg KOH/g, Umsatz 79 %. Nach weiteren 2,5 h ist die Säurezahl bei 2,6 mg KOH/g (97 % Umsatz). Eine Säurezahl (gemessen) von 0,8 mg KOH/g (99 % Umsatz) liegt nach weiteren 1,58 Stunden vor so, dass das Hydroxylgruppen-terminierte Polyesterol resultiert.

| Bsp. | m(COOH) [mol] | n(OH) [mol] | n1(OH) [mol] | n(Polyol i)/n (Polyol ges.) [mol-%] | t1 [h] | t2 [h] | t1/(t1+t2) [h/h] | SZ(berechnet)/SZ (gemessen) Schritt i) | SZ(9,43h) [mg KOH/g] | OHZ [mg KOH/g] | t bis SZ <1,0 mgKOH/g | RSZ [kg/(h)] |
|---|---|---|---|---|---|---|---|---|---|---|---|---|
| 1 | 20,4 | 22,3 | 18,7 | 83,8 | 5,85 | 3,58 | 0,62 | 0,58 | 0,8 | 41,9 | 9,43 | 0,23 |
| 2 (Vgl.) | 20,4 | 22,3 | 13,4 | 60,0 | 5,85 | 4,50 | 0,57 | 0,98 | 1,7 | 48,5 | 10,35 | 0,21 |
| 3 (Vgl.) | 20,4 | 22,3 | 22,3 | 100,0 | | | 1,00 | - | 1,6 | 39,7 | 10,35 | 0,21 |
| 4 (Vgl.) | 20,4 | 22,3 | 18,7 | 83,8 | 5,10 | 5,2 | 0,50 | 0,56 | 2,6 | 44,7 | 10,3 | 0,21 |

Beispiel 5: Zweistufiges Herstellungsverfahren eines Hydroxylgruppen-terminierten Polyesterols umfassend der Kondensationsreaktion einer Polycarbonsäure und eines cyclischen Carbonsäureanhydrids mit einem Polyol

In einem 1. Schritt (Schritt i)) werden 961,1 g Phthalsäureanhydrid, 334,0 g Adipinsäure, Diethylenglykol 489,6 g und 228,4 g Ethylenglykol (62 mol% der gesamten Hydroxyl-Stoffmenge aus i) und ii)) in einen 4 L-4-Halskolben ausgestattet mit mechanischem Rührwerk, Heizpilz, Sumpfthermometer, Stickstoff-Gasanschluss, Membranpumpen-Vakuum-Anschluss und einer 40 cm-Füllstoffkolonne mit aufgesetztem Kolonnenkopf und Intensivkühler eingewogen. Das Gemisch wird innerhalb von 20 Minuten auf 160 °C aufgeheizt. 3,1 h nachdem 150 °C erstmals als Sumpftemperatur überschritten wurden wird Vakuum angelegt und innerhalb von 55 Minuten auf 20 mbar verringert. Nach weiteren 1,75 h liegt die Säurezahl (gemessen) des Carboxylgruppen-terminierten Polyester-Intermediats bei 109 mg KOH/g was einem Umsatz von 83 % entspricht. Rechnerisch ist eine Säurezahl (gemessen) von 29,3 mg KOH/g möglich, was einem Umsatz von 100 % entspräche. Der Ansatz mit dem in Schritt i) gebildeten Carboxylgruppen-terminierten Polyester-Intermediats wird auf Raumtemperatur abgekühlt.

Im sich anschließenden 2. Schritt (Schritt ii) werden 318,4 g Ethylenglykol (38 mol% der gesamten Hydroxyl-Stoffmenge aus i) und ii)) und 152,9 mg Zinn(II)Chlorid*$2H_2O$ 28%ig in Ethylenglykol (20 ppm Zinn(II)Chlorid*$2H_2O$ gerechnet auf die Gesamtansatzmenge) zu dem Carboxylgruppen-terminierten Polyester-Intermediats aus Schritt i) hinzugegeben. Die Säurezahl (berechnet) beträgt zu diesem Zeitpunkt 93,3 mg KOH/g was einem Umsatz des Carboxylgruppen-terminierten Polyester-Intermediats in Schritt ii) von 0 % entspricht. Das Gemisch wird innerhalb von 35 Minuten auf 220 °C aufgeheizt. Nachdem erstmals in Schritt ii) 150 °C als Sumpftemperatur überschritten wurden dauert es 15 Minuten bis 220 °C im Sumpf erreicht sind, es wird der Druck auf 700 mbar verringert und innerhalb von 1,33 h auf 300 mbar eingestellt. Säurezahl (gemessen): 4,1 mg KOH/g, Umsatz 95,7 %. Nach weiteren 35 Minuten liegt eine Säurezahl von 1,7 mg KOH/g (98 % Umsatz) vor so, dass das Hydroxylgruppen-terminierte Polyesterol resultiert.

2.6 Beispiel 6 (Vergleich) Zweistufiges Herstellungsverfahren eines Hydroxylgruppen-terminierten Polyesterols umfassend der Kondensationsreaktion einer Polycarbonsäure und eines cyclischen Carbonsäureanhydrids mit einem Polyol

In einem 1. Schritt (Schritt i)) werden 961,1 g Phthalsäureanhydrid, 334,0 g Adipinsäure, Diethylenglykol 489,6 g und 228,4 g Ethylenglykol (62 mol% der gesamten Hydroxyl-Stoffmenge aus i) und ii)) in einen 4 L-4-Halskolben ausgestattet mit mechanischem Rührwerk, Heizpilz, Sumpfthermometer, Stickstoff-Gasanschluss, Membranpumpen-Vakuum-Anschluss und einer 40 cm-Füllstoffkolonne mit aufgesetztem Kolonnenkopf und Intensivkühler eingewogen. Das Gemisch wird innerhalb von 20 Minuten auf 160 °C aufgeheizt. 3,1 h nachdem 150 °C erstmals als Sumpftemperatur überschritten wurden wird Vakuum angelegt und innerhalb von 60 Minuten auf 20 mbar verringert. Nach weiteren 60 Minuten liegt die Säurezahl (gemessen) des Carboxylgruppen-terminierten Polyester-Intermediats bei 127 mg KOH/g was einem Umsatz von 80 % entspricht. Rechnerisch ist eine Säurezahl (gemessen) von 29,3 mg KOH/g möglich, was einem Umsatz von 100 % entspräche. Der Ansatz mit dem in Schritt i) gebildeten Carboxylgruppen-terminierten Polyester-Intermediats wird auf Raumtemperatur abgekühlt.

Im sich anschließenden 2. Schritt (Schritt ii) werden 318,4 g Ethylenglykol (38 mol% der gesamten Hydroxyl-Stoffmenge aus i) und ii)) und 152,9 mg Zinn(II)Chlorid*$2H_2O$ 28%ig in Ethylenglykol (20 ppm Zinn(II)Chlorid*$2H_2O$ gerechnet auf die Gesamtansatzmenge) zu dem Carboxylgruppen-terminierten Polyester-Intermediats aus Schritt i) hinzugegeben. Die Säurezahl (berechnet) beträgt zu diesem Zeitpunkt 108,8 mg KOH/g was einem Umsatz des Carboxylgruppen-terminierten Polyester-Intermediats in Schritt ii) von 0% entspricht. Das Gemisch wird innerhalb von 35 Minuten auf 220 °C aufgeheizt. Nachdem erstmals in Schritt ii) 150°C als Sumpftemperatur überschritten wurden dauert es 15 Minuten bis 220 °C im Sumpf erreicht sind, es wird der Druck auf 700 mbar verringert und innerhalb von 1,42 h auf 300 mbar eingestellt. Säurezahl (gemessen): 7,0 mg KOH/g, Umsatz 94 %. Nach weiteren 2,67 Stunden liegt eine Säurezahl von 1,8 mg KOH/g (98 % Umsatz) vor so, dass das Hydroxylgruppen-terminierte Polyesterol resultiert.

| Bsp. | m(COOH) [mol] | n(OH) [mol] | n1(OH) [mol] | n(Polyol i)/n (Polyol ges.) [mol-%] | t1 [h] | t2 [h] | t1/ (t1+t2) [h/h] | SZ(berechnet)/SZ (gemessen) Schritt i) | SZ(7,93h) [mgKOH lg] | OHZ [mg KOH/g] | t bis SZ <2,0 mgKOH/g | RSZ [kg/(h)] |
|---|---|---|---|---|---|---|---|---|---|---|---|---|
| 5 | 17,5 | 26,9 | 16,7 | 62,0 | 5,77 | 2,16 | 0,73 | 0,27 | 1,70 | 250,5 | 7,93 | 0,27 |
| 6 (Vgl.) | 17,5 | 26,9 | 16,7 | 62,0 | 5,10 | 4,34 | 0,54 | 0,23 | 2,85 | 254,5 | 9,44 | 0,23 |

**Patentansprüche**

1. Verfahren zur Herstellung eines Hydroxylgruppen-terminierten Polyesterols umfassend der Kondensationsreaktion einer Polycarbonsäure und/oder eines cyclischen Carbonsäureanhydrids, bevorzugt einer Polycarbonsäure, mit m(COOH)-mol Carboxylgruppen mit einem Polyol mit n(OH)-mol freien Hydroxylgruppen in einem Reaktor umfassend folgende Schritte:

   i) Umsetzung der Polycarbonsäure und/oder des cyclischen Carbonsäureanhydrids mit m(COOH)-mol Carboxylgruppen mit einer ersten Teilmenge T1 des Polyols mit n1(OH)-mol freien Hydroxylgruppen innerhalb der Reaktionszeit t1 unter Bildung eines Carboxylgruppen-terminierten Polyester-Intermediats,
   ii) Umsetzung des Carboxylgruppen-terminierten Polyester-Intermediats mit einer zweiten Teilmenge T2 des Polyols mit n2(OH)-mol freien Hydroxylgruppen innerhalb der Reaktionszeit t2 unter Bildung des Hydroxylgruppen-terminierten Polyesterols;
   wobei das Stoffmengenverhältnis m(COOH)/n1(OH) größer als 1,0 mol/mol, bevorzugt von 1,02 mol/mol bis 1,5 mol/mol, und besonders bevorzugt von 1,05 mol/mol bis 1,3 mol/mol ist;
   wobei m(COOH) < n(OH), bevorzugt m(COOH)+1,0 <n(OH), besonders bevorzugt m(COOH)+1,0 < n(OH) < m(COOH)+2,0 ist;
   wobei das in Schritt i) gebildete Wasser kontinuierlich oder stufenweise, bevorzugt kontinuierlich aus dem Reaktor entfernt wird;
   wobei in Schritt i) von 62 mol-% bis 95 mol-%, bevorzugt von 64 mol-% bis 90 mol-% und besonders bevorzugt von 75 mol-% bis 85 mol-% des Polyols bezogen auf die Summe der in Schritt i) und ii) zugegebenen Menge an Polyol zugegeben wird;
   und wobei die Reaktionszeit t1 von 0,58 h/h bis 0,95 h/h, bevorzugt von 0,59 h/h bis 0,90 h/h und besonders bevorzugt von 0,60 h/h bis 0,80 h/h und ganz besonders bevorzugt von 0,60 h/h bis 0,75 h/h bezogen auf die Summe der Reaktionszeiten t1 und t2 beträgt.

2. Verfahren gemäß Anspruch 1, wobei das Hydroxylgruppen-terminierte Polyesterol eine berechnete Hydroxylzahl von 10 mg KOH/g bis 500 mg KOH/g, bevorzugt von 10 mg KOH/g bis 400 mg KOH/g und besonders bevorzugt von 15 mg KOH/g bis 350 mg KOH/g aufweist.

3. Verfahren gemäß Anspruch 1 oder 2, wobei der Anteil an primären Hydroxylgruppen der ersten Teilmenge T1 des Polyols in Schritt i) mindestens 50 %, bevorzugt mindestens 60 % und besonders bevorzugt mindestens 75 % bezogen auf die Summe aller Hydroxylgruppen der ersten Teilmenge T1 des Polyols beträgt.

4. Verfahren gemäß einem der Ansprüche 1 bis 3, wobei das Polyol eine oder mehrere Verbindung(en) ist und ausgewählt wird aus der Gruppe bestehend aus Ethylenglycol, Diethylenglycol, Triethylenglycol, 1,2-Propylenglycol, Dipropylenglycol, 1,3-Propandiol, 1,3-Butandiol, 1,4-Butandiol, 1,6-Hexandiol, 1,12-Dodecandiol, Neopentylglycol, Trimethylolpropan, Triethylolpropan, Rizinusöl und Glycerin, bevorzugt Ethylenglycol, Diethylenglycol, 1,2-Propylenglycol, 1,4-Butandiol, besonders bevorzugt wird 1,4-Butandiol und Diethylenglycol.

5. Verfahren gemäß einem der Ansprüche 1 bis 4, wobei die Polycarbonsäure eine oder mehrere Verbindung(en) ist und ausgewählt wird aus der Gruppe bestehend aus Phthalsäure, Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Brassylsäure, Tetradecandisäure, Thapsiasäure, Maleinsäure, Fumarsäure, Citraconsäure, Mesaconsäure und Furandicarbonsäure, bevorzugt Bernsteinsäure, Glutarsäure und Adipinsäure besonders bevorzugt Adipinsäure.

6. Verfahren gemäß einem der Ansprüche 1 bis 5, wobei das cyclische Carbonsäureanhydrid ein oder mehrere Verbindungen ist und ausgewählt wird aus der Gruppe bestehend aus Bernsteinsäureanhydrid, Maleinsäureanhydrid, Glutarsäureanhydrid, Itaconsäureanhydrid, Zitronensäureanhydrid, cis-Aconitsäureanhydrid, 2-(2'-carboxyethyl)maleinsäureanhydrid, 1-methlyl-2-(2'-carboxyethyl)maleinsäureanhydrid, Phthalsäureanhydrid und Trimellitsäureanhydrid, bevorzugt Bernsteinsäureanhydrid, Maleinsäureanhydrid Phthalsäureanhydrid und Trimellitsäureanhydrid, besonders bevorzugt Phthalsäureanhydrid.

7. Verfahren gemäß einem der Ansprüche 1 bis 6, wobei Schritt i) bei einer Temperatur von 150 °C bis 250 °C, bevorzugt von 155 °C bis 240 °C, und besonders bevorzugt von 158 °C bis 240 °C durchgeführt wird.

8. Verfahren gemäß einem der Ansprüche 1 bis 7, wobei Schritt i) in einer Reaktionszeit t1 von 30 min bis 12 h, bevorzugt von 30 min bis 10 h, und besonders bevorzugt von 60 min bis 8 h durchgeführt wird.

9. Verfahren gemäß einem der Ansprüche 1 bis 8, wobei Schritt i) die Schritte i-1) und i-2) umfasst, wobei sich Schritte i-1) zeitlich an Schritt i-2) anschließt und Schritt i-2) mindestens 90 %, bevorzugt mindestens 70 % und besonders bevorzugt 50 % der Reaktionszeit t1 von Schritt i) umfasst, und wobei der Reaktordruck in Schritt i-2) geringer ist als in Schritt i-1).

10. Verfahren gemäß Anspruch 9, wobei der Reaktordruck in Schritt i-2) von $1{,}0\cdot10^{-3}$ bara bis 1,0 bara, bevorzugt von $1{,}0\cdot10^{-3}$ bara bis 0,55 bara und besonders bevorzugt von $1{,}0\cdot10^{-3}$ bara bis 0,35 bara beträgt.

11. Verfahren gemäß einem der Ansprüche 1 bis 10, wobei Schritt ii) bei einer Temperatur von 150 °C bis 250 °C, bevorzugt von 155 °C bis 240 °C, und besonders bevorzugt von 160 °C bis 240 °C durchgeführt wird.

12. Verfahren gemäß einem der Ansprüche 1 bis 11, wobei der Reaktordruck in Schritt ii) von $1{,}0\cdot10^{-3}$ bara bis 1,0 bara, bevorzugt von $1{,}0\cdot10^{-3}$ bara bis 0,55 bara und besonders bevorzugt von $1{,}0\cdot10^{-3}$ bara bis 0,35 bara beträgt.

13. Verfahren gemäß einem der Ansprüche 1 bis 12, wobei Schritt ii) in Gegenwart eines Katalysators durchgeführt wird.

14. Hydroxylgruppen-terminiertes Polyesterol erhältlich nach dem Verfahren gemäß einem der Ansprüche 1 bis 12, wobei das Hydroxylgruppen-terminierte Polyesterol eine berechnete Hydroxylzahl von 10 mg KOH/g bis 500 mg KOH/g, bevorzugt von 10 mg KOH/g bis 400 mg KOH/g und besonders bevorzugt von 15 mg KOH/g bis 350 mg KOH/g aufweist.

15. Verwendung des Hydroxylgruppen-terminierten Polyesterols hergestellt nach dem Verfahren gemäß einem der Ansprüche 1 bis 13 oder des Hydroxylgruppen-terminierten Polyesterols gemäß 14 zur Herstellung eines Polyurethans.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 717 535 B1 (COVESTRO INTELLECTUAL PROPERTY GMBH & CO KG [DE]) 18. Mai 2022 (2022-05-18) * Absatz [0074] - Absatz [0079] * ----- | 14,15 | INV. C08G63/16 C08G63/78 |
| X | EP 2 352 774 B1 (BAYER MATERIALSCIENCE AG [DE]) 27. März 2013 (2013-03-27) * Seite 8 - Seite 9; Beispiele 2-7; Tabellen 1,3 * ----- | 1-15 | |

**RECHERCHIERTE SACHGEBIETE (IPC)**

C08G
C09J

Der vorliegende Recherchenbericht wurde für alle Patentansprüche erstellt

| Recherchenort | Abschlußdatum der Recherche | Prüfer |
|---|---|---|
| Den Haag | 22. März 2024 | Adigbli, Francis |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 23 20 1897

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-03-2024

| Im Recherchenbericht angeführtes Patentdokument | Datum der Veröffentlichung | Mitglied(er) der Patentfamilie | Datum der Veröffentlichung |
|---|---|---|---|
| EP 3717535 B1 | 18-05-2022 | CN 111448231 A | 24-07-2020 |
| | | EP 3492503 A1 | 05-06-2019 |
| | | EP 3717535 A1 | 07-10-2020 |
| | | PL 3717535 T3 | 12-09-2022 |
| | | SG 11202003660R A | 29-06-2020 |
| | | US 2020299454 A1 | 24-09-2020 |
| | | WO 2019105935 A1 | 06-06-2019 |
| EP 2352774 B1 | 27-03-2013 | BR PI0921275 A2 | 08-03-2016 |
| | | CA 2742543 A1 | 14-05-2010 |
| | | CN 102203154 A | 28-09-2011 |
| | | EP 2352774 A1 | 10-08-2011 |
| | | ES 2407853 T3 | 14-06-2013 |
| | | JP 2012507617 A | 29-03-2012 |
| | | KR 20110093778 A | 18-08-2011 |
| | | PL 2352774 T3 | 31-12-2013 |
| | | RU 2011122529 A | 20-12-2012 |
| | | US 2011236671 A1 | 29-09-2011 |
| | | WO 2010051962 A1 | 14-05-2010 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2018058016 A1